**Europäisches Patentamt**

**European Patent Office**

**Office européen des brevets**

(19)

(11) Publication number : **0 467 003 B1**

# EUROPEAN PATENT SPECIFICATION

(12)

(45) Date of publication of patent specification :
**12.01.94 Bulletin 94/02**

(51) Int. Cl.<sup>5</sup> : **A01K 79/00**

(21) Application number : **90830333.2**

(22) Date of filing : **17.07.90**

(54) **A trawling boat equipped with a conveyor structure enabling continuous catch transfer from net on board.**

(43) Date of publication of application :
**22.01.92 Bulletin 92/04**

(45) Publication of the grant of the patent :
**12.01.94 Bulletin 94/02**

(84) Designated Contracting States :
**AT BE CH DE DK ES FR GB GR LI LU NL SE**

(56) References cited :
**WO-A-82/02645**
**WO-A-90/00858**
**CH-A- 346 494**
**DE-C- 172 233**
**NL-A- 275 329**
**NL-C- 1 208**
**SU-A- 990 760**

(56) References cited :
**US-A- 1 606 668**
**US-A- 3 440 752**
**US-A- 3 838 534**
**US-A- 4 434 572**

(73) Proprietor : **SOCIETA' ESERCIZIO CANTIERI S.P.A.**
**Via dei Pescatori 56**
**I-55049 Viareggio (Lucca) (IT)**

(72) Inventor : **La Ferla, Giuseppe, Soc. Esercizio Cantieri S.p.A.**
**Via dei Pescatori 56**
**I-55049 Viareggio, (Lucca) (IT)**

(74) Representative : **Iannone, Carlo Luigi et al**
**Ing. Barzanò & Zanardo Roma S.p.A. Via Piemonte, 26**
**I-00187 Roma (IT)**

EP 0 467 003 B1

Jouve, 18, rue Saint-Denis, 75001 PARIS

## Description

This invention relates to a trawling boat with a conveyor structure enabling continuous catch transfer from net on board.

In a more detailed way, this invention relates to a boat of the type mentioned above that is so constructed as to operate according to the traditional standard rules or, by employing a movable device, to realize a continuous catch transfer from net on board.

As is well known, trawling boats can operate with nets grazing along the bottom (fishing from the bottom) or at any immersion depth, even far from the bottom (pelagic fishing or deep-sea fishing). In the first instance, the fishing aims at fish "dwelling" and "pasturing" in that bottom area; in the second instance, the fishing is rather aimed at fish shoals that pass through the zone. Fishing from the bottom is remarkably wider spread, but pelagic fishing is increasingly adopted in general because it is non-destructive with respect to the natural habitat, and it does not damage reproduction. At present, ships operate on any depth, from a few metres up to more than one thousand metres, but the widest employment occurs on continental plat-forms, about 50-100 metres on the average.

Boats employed at the present time for trawling perform the loading on board of fishes that have gone eventually to the bottom of the net bag, according to cyclic operations.

The trawl-net is taken up after some time or when a suitable device points out that a sufficient amount of fish has come into the net.

After unloading the bag into the boat, the trawl-net and the towropes are eased away once again for the next similar cycle. Each cycle lasts on the average about three hours or longer if fishiness of the zone is quite poor.

It is well evident that, for the whole period of each cycle, the only productive step for fishing is that during which the trawl-net is towed, under optimum conditions.

On the contrary, the steps during which the equipment is eased away into the sea and then recovered and emptied are dead times which affect the productivity of the boat negatively.

More particularly the operations of hauling the bag can require even a very long time when the bag is very full so that it is bulky and of a weight that stresses the equipment involved to a high extent. In addition, a weighty bag does not necessarily mean a luckily abundant catch; indeed, quite often the bag becomes filled exceedingly with leaves, mud, foreign objects, or of fish but of a quality which is of no importance for the market so that they are to be thrown again into the sea.

On concluding, dead times in connection with such type of fishing are very long and productivity is extremely low.

Accordingly, there is the need for a boat capable of operating without the dead times mentioned above.

Boats have been proposed recently in which the recovery of catch is performed by means of a pump.

According to this kind of solution, fish are to pass through the pump body, with all problems involved in such passage, in addition to the limitations regarding the sizes of the fish that can be caught.

In NL-C-1208 a boat is described having a net in the form of a bag and equipped with piping for sucking the catch, said piping being made up of modular pieces which are coupled to one another, whose lower end, which is provided with a suction mouth, is at the point corresponding to the end of said bag or net; with suction means for sucking the catch through said piping; with sieving means for the separation of the catch from water; and with hoisting means for lifting the catch from the filtering zone into the boat; a well being provided in the hull of the boat.

In the light of the considerations above, the object of the present invention is that of realizing a boat having a device that enables a continuous catch transfer, said boat being suitable for any type of trawl-fishing, even of the traditional kind, i.e. with no continuous catch transfer, and allowing, in addition to obviating the drawbacks mentioned above, fishing to be performed in better conditions.

The boat according to the present invention shall be provided with a catch recovery zone located at the point corresponding to the underbody area which can be described as an "indifferent area" with respect to the variations in the dipping level which are caused by the longitudinal pitching motion, differently from the traditional boats for trawling which are endowed with an astern ramp that undergoes remarkable height variations above the sea level, with consequent difficulties as regards the net dipped into the sea (tears, breaking, harm).

Moreover, just because of its structure, the boat according to the present invention is remarkably advantageous when fishing the "Krill".

Indeed, the Krill, which is a very small shrimp of the Antarctic zones, can be caught in enormous amounts and at very limited depths, almost on the surface. At present, they complain of a low productivity which is caused by the small specific concentration and by the very bad meteorological and sea conditions which hinder the manoeuvres of the equipment strongly (dead periods).

Just the possibility of getting rid of such operations and of concentrating the catch to a higher extent through a continuous suction with filtering has been the basis of the principles that inspire the new present finding even though, as is obvious, its useful employment is not limited to the fishing of "Krill".

These and other results are obtained according to the present invention by realising a trawling boat provided with a conveyor structure enabling continuous catch transfer from the bottom of net on board, said conveyor structure comprising, essentially, a piping which is made up of modular pipe lengths which are joined to one another in a number sufficient to satisfy the specific needs, whose free end is at the bottom of the bag of the net, whereas the other end is housed at the inlet of a well which is opened through the keel of the boat, a module being housed within said well, such module being coupled to said piping and being provided with means for separating the catch from water, and for raising the catch itself on board of the boat with a practically continuous action.

Accordingly, it is a specific object of the present invention a trawling boat comprising a net having bag in its lower end and suitable for trawling, said boat being equipped with a piping for sucking the catch out of the net into the boat, said piping being made up of modular pieces which are coupled to one another, whose lower end, which is provided with a suction mouth, is at the point corresponding to the bag of said net; suction means for sucking the catch through said piping; separation means which are coupled to the upper end of said piping for the separation of the catch from water; hoisting means for lifting the catch from the separation zone up to the inside of the boat; and an opening or well, obtained in the hull of the boat, through which the net and the piping are eased away and the catch lifted on board, characterized in that said separation means and said hoisting means are realized as a single module which is provided with a mouth for coupling the same with the upper end of the pipe, and with lifting means, in that a gradual flaring of the cross-sectional area of the module with respect to the cross-sectional area of the piping itself occurs at the point corresponding to said coupling with the piping, and in that a bulkhead bearing a number of small-size holes is provided near said coupling zone between said module and the piping, in communication with a compartment inside which the water sucked by the pipe passes, means being provided within said compartment for expelling water towards the outside.

According to a preferred embodiment of the boat according to the present invention, a cavity is realized in the keel of the boat, astride the longitudinal symmetry plane, from the astern zone to the inlet mouth of said opening or well, said cavity being connected to the well itself, for easing away the net and the piping. Preferably, both the cavity and the opening will be of the same width.

The cavity can be included between two structures in the shape of a vertical fin, which allow the net to slide. Moreover, in order to avoid any interference with the net itself, the boat shall be endowed with two ducted propellers which are arranged outside said structures.

The opening or well obtained in the hull will preferably be located on the underbody zone which is unaffected by the longitudinal pitching motion of the boat.

The operation of sucking water out of said compartment will be performed through at least one centrifugal electric pump, or preferably through two such pumps.

The lifting means in said module will be made up of a bucket lifting device that rotates between a pair of idle wheels and a pair of driving wheels, said lifting device preferably comprising buckets alternate with straight lengths.

Again according to the present invention, while the boat according to the present invention is operating, the module will be arranged inside said opening or well.

In the boat according to the present invention, the net, wound about a suitable net-winding wheel, is pulled by two winches arranged on the astern zone of the boat, said winches containing the ropes for the diverging members, and by two further winches arranged on the forward zone, for performing the towing of the net.

Moreover, a directional motor can be provided in the front position which serves the purpose of obtaining a better manoeuvrability of the boat.

In addition, devices can be provided on board of the boat according to the present invention for supplying electrical power to one or more projectors, and/or one or more TV cameras.

Further, a compressed air hose can be arranged along the piping, said hose feeding air to two return branches of gradually decreasing cross-sections and bearing holes of small size, towards the arms of the net, for obtaining two ideal walls of air bubbles.

A floating buoy can be provided at the point corresponding to the bag of the net, with a rope of adjustable or non-adjustable length, for fishing at the desired depth.

The boat according to the present invention is particularly suitable for fishing in not too deep waters (about 100 m).

The operation and the structure of the present finding will be more evident from the disclosure of the figures in the following.

The present invention will be now disclosed according to some preferred embodiments of the same with particular reference to the figures of the enclosed drawings, wherein:

Figure 1 is a longitudinal cross-sectional view of a boat according to the present invention;
Figure 2 is a top view of the boat of Figure 1;
Figure 3 is a side view of a detail of the boat according to the present invention; and
Figure 4 is a longitudinal cross-sectional view of the detail shown in Figure 2.

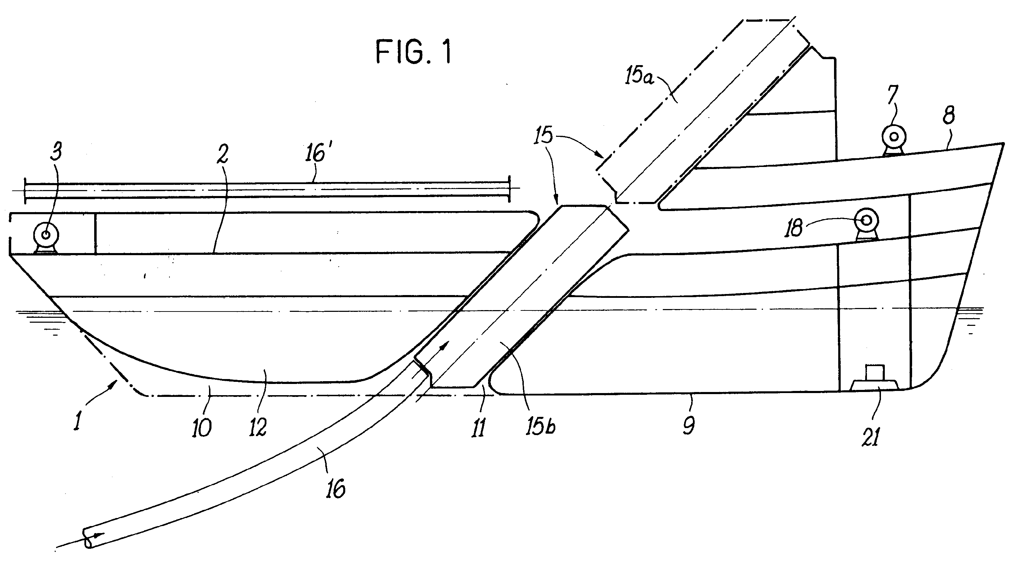

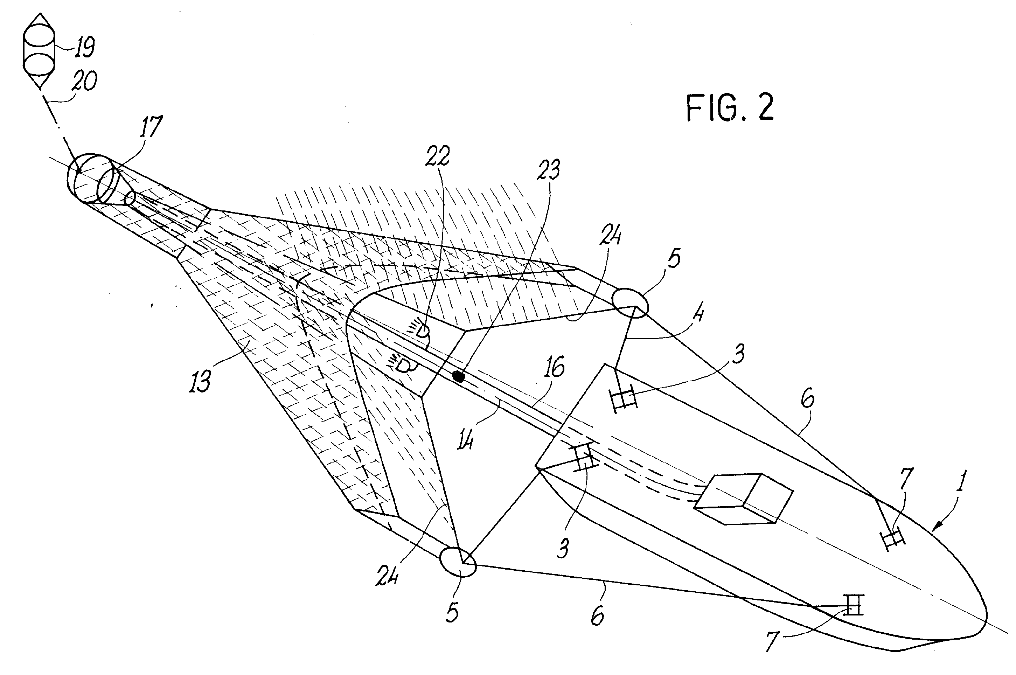

With reference now to figures 1 and 2 of the enclosed drawings, the boat 1 according to the present invention can be observed, on whose astern zone of the upper deck 2 two winches 3 are arranged for the towing operation. Said winches 3 bear the main towropes 4 of the diverging members 5.

The winches 3, in the case of the traditional fishing performed in deep-sea, a case in which it is not advantageous to operate with the continuous catch transfer device according to the present invention, operate in a conventional way; whereas in the case of fishing with continuous catch transfer they serve the purpose of recovering the diverging members 5, whereas for towing the same through the ropes 6, the two winches 7 are employed which are arranged in the forward zone on the main deck 8.

A cavity 10 is realized in the keel 9 of the boat 1, said cavity being astride the symmetry plane of the boat 1 and extending from the astern extremity to a well 11 with which it is connected.

The cavity 10 is arranged widthwise between two structures 12 in the shape of a vertical fin, said structures allowing the net 13 to slide.

In order to avoid interference with the sliding of the net 13, the boat 1 shall be equipped with two propellers (not shown), arranged laterally with respect to the structures 12.

The well 11 of the same width of said cavity 10 is at a slope of 45° towards the bow, and goes from the keel 9 up to the highest upper works of the boat, and said well is suitable to contain a so-called "module" 15. The height extent of the well 11 is necessary to allow the module 15 to go into the condition 15a which is operative during fishing with continuous catch transfer, but also into its upper position 15b which is operative while fishing according to the traditional rules. If this second fishing system is to be employed continually for long periods (for instance, for seasonal periods), said "module" 15 can also be unloaded and the boat 1 can behave as a boat of already existing type, but with some advantages as will be illustrated in the following.

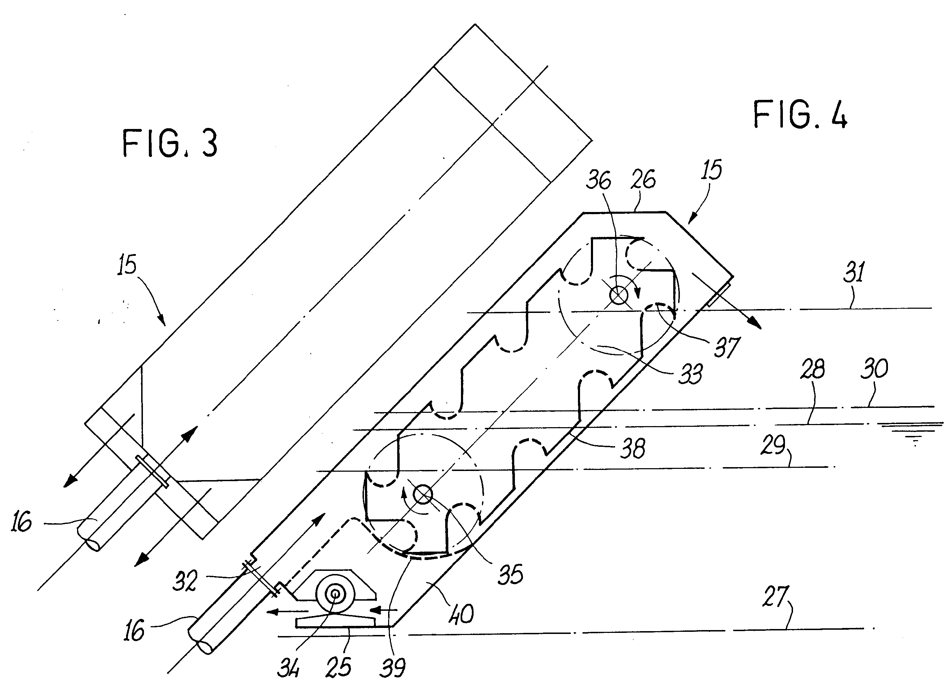

The "module" 15 which can be moved inside the well 11, receives the catch through the piping 16, allows the fish to be separated from water, lifts the fish up to to the upper deck 2, and puts the fish into a suitable hopper (not shown) for collection. The characteristics of the "module" 15 will be disclosed in a more detailed way with reference to Figures 3 and 4.

In order to obtain the continuous catch transfer from the bottom of net on board, the piping 16 made up of a hard rubber of suitable thickness and of inside diameter of about 800 mm is provided in the form of a number of pieces 16' of about 25m length each, provided with end flanges, for connecting the same to one another by means of bolts. Said pieces 16' are commonly put on the main deck 8 and they are progressively eased away through the well 11, together with the net 13; the first piece 16' eased away is provided with a frustum-shaped suction mouth in order to make it easier to pass the catch from the bottom of the beg 17 to the piping 16. The last piece 16' is connected by a flange to the lower side of the module 15, when it is in the upper position 15a; when the module 15 goes down to its lower position 15b, the whole piping 16 is in the working position. The number of the required pieces 16' is variable according to the fishing depth and to the sizes of the net 13 employed; 6-8 pieces are sufficient on the average. A larger number is possible, according to the existing space on the deck and considering the presence of suitable cranes for shifting the rubber pieces but the assembling operation would be too laborious just like the recovery operation at the end of the fishing period.

The net 13 is arranged under rest conditions on the suitable net-winding wheel 18. The net 13 passing through the forward zone of the upper deck inserts itself into the well 11 and is eased away, around the piping 16, so reaching the working position (Figure 2).

In the case of traditional fishing, the net 13 will be fully similar to those already existing; it will be recovered by means of the net-winding winch 18 instead of being hauled onto an astern ramp, and it will be lifted till causing the bag 17 to be above the upper deck 2, possibly with the aid of the cranes already mentioned above (not shown) with regard to the piping 16. The whole zone of the upper deck 2 between the forward extremity of the well 11 and the net-winding winch 18 is sheltered from inclemencies of weather and is largely above the sea level, so forming an optimal repairing platform for nets 13 against any bad weather.

From the last mentioned standpoint, as already put into evidence above, the fact is absolutely original that the well 11 is located as a matter of practice in the underbody zone that can be characterized as "indifferent" with respect to changes in immersion depth caused by the longitudinal pitching motion. Accordingly, contrarily to traditional trawling boats which are endowed with astern ramp that undergoes cyclic and remarkable height changes above the sea (on rough sea) with consequent difficulties with the net dipped into the sea (tears, breaking, harm for people and so on), in the boat according to the present invention, the rising ramp of the net 13 and of the bag 17 is in an almost steady position with respect to the sea, so as to allow the personnel to operate in a protected and safer position and with an advantageous saving of time. Moreover, in the case of fishing in waters with floating ice there is the strong advantage of recovering both the net 13 and the bag 17 in deep water under the body of the ship, i.e., water free from ice; when sailing astern, sometimes ice closes in the wake of the ship and can fill the net to such an extent as to cause the loss of the whole net with the catch.

The net 13 of the boat according to the present invention has on the whole a conventional shape; the bag 17 is of less length as this is not necessary and, on the contrary, there is the need for limiting the length of the piping 16.

A floating buoy 19 which is coupled to the bag 17 by means of a rope 20 of predetermined length allows the bag 17 to be kept at the desired immersion depth. The buoy 19 could also comprise a small winch for adjusting the length of the rope 20 while fishing.

The point where the pulling forces are applied at a quite forward position could give rise to problems regarding the course stability of the boat 1.

The piping 16 and the net 13 made up a stabilizing member.

Anyway, the forward auxiliary motor 21 capable of exerting a directional thrust can be employed over the whole 360° range, with consequent remarkable steering effects just like with a rudder.

The propeller 21, when it exerts its thrust in the longitudinal direction fore and aft is very useful during the sliding step of the net 13 below the cavity 10, as it allows the two main propellers arranged on the side of the cavity 10 to be stopped temporarily, so avoiding the danger of a possible insertion into the propellers themselves of net shreds, or of rope parts, or of any other foreign body casually connected to the system.

The piping 16 not only performs the function of sucking water, but also that of pulling the bottom of the bag 17, to which the piping itself is firmly connected through the terminal funnel. In that case and for such function, contrarily to the traditional nets, the diverging members 5 have not the task of towing the bag 17, but they perform their whole function only to open the arms of the net 13; said net, as compared to a traditional net of equal sizes, can certainly keep its arms more open so allowing a better catch. The presence of such "umbilical cord" which is both elastic and strong, as well as of large sizes, allows the net 13 to be employed in different ways.

For instance, it is possible to cause electric supply cables to arrive up to the mouth of the net 13 along the piping 16 for supplying power to one or more projectors 22 which are of strong light intensity and capable of creating in the night a remarkable call to the fish, like in the case of the so-called "lampare" for night-fishing, but with a catching technique which is definitely of lower level. Moreover, one or more tv cameras 23 can be provided, which could transfer directly to the bridge of the boat the situation existing at the mouth of the net 13, so allowing the crew to take the suitable measures.

Moreover, a further extremely important and absolutely original possibility occurs in case of fishing the Krill. If a compressed air hose 14 is led along the piping 16 from the boat 1 up to the net 13, two return branches 24 of the hose 14 itself can be fed, towards the two arms of the net, at their lower base. If two such branches 24 of the hose are gradually decreasing in cross-section and bear a suitable number of holes of small size, it is possible to obtain a continuous escape of air that bubbles towards the surface so giving rise, together with the speed of the boat, to two ideal air bubble walls as shown in Figure 2. This can be obtained by giving suitable sizes to the air hose 14, at any cross-section of the same, through providing on board suitable compressors capable of giving the required air flowrate at a suitable pressure.

Thus the very small shrimps (the "Krill") that meet the two converging formations of air bubbles become concentrated by the same towards their centre portion and are induced to rise towards the surface till they meet the upper part of the net 13 which unavoidably conveys them towards the suction funnel. Such behaviour of shrimps is the result of accurate scientific observation, so that it is reported in the technical literature concerning that field and is known as the so-called "bubble netting"; such behaviour allows for instance groups of whales intelligently associated to that aim, to concentrate into a relatively small space a large number of shrimps which before were scattered and dispersed, so that they obtain a full-mouth meal (each one in turn).

Such type of solution allows the net 13 to be constructed with much wider mashes for the whole zone outside the channel formed by the two walls of air bubbles. The advantage deriving from that is considerable; indeed, if the whole net is made with very small mashes, because of the very small size of shrimps, the boat must necessarily proceed at low speed because of the danger of knocking the bottom of the net out, and in addition it is impossible to have a very large net, with consequent remarkable losses in catch productivity. With the solution according to the present invention, nets could be larger and towed at a faster speed with no problems.

Through simultaneous realization of the air bubble barriers and of projectors for lighting located before the barriers themselves, it is possible to create during night a remarkable effect of "call scenery" with likely relevant effect as regards the catch.

Moreover, because of other reasons, said air bubble barriers (employed in daylight and also in the night) in combination with wide mash nets, as is well known are strongly attractive for tunny shoals on condition that such shoals have been previously located and followed by means of sonar, or of helicopters or other traditional means; despite the strong difference between the possible forward speed of the net, the diverting effect of air bubbles could be sufficient to convey the whole shoal towards the bottom of the net and hence into the fatal funnel of the piping 16 whose diameter is suitable even for large tunnies and whose inside speed of water is faster than any contrary reaction of the same.

Figures 3 and 4 show the "module" 15 of substantially parallelepipedal shape which has two bevelled parts 25 and 26 at its lower and upper ends. Preferably the "module" 15 is made up of metal, in particular of stainless steel, and is sufficiently strong and tight sealed to the outside.

In Figures 3 and 4 said "module" 15 is represented as sloping at 45° to the horizontal plane, i.e. in the normal operative lower position, that is partially dipped. Line 27 represents the line of the false keel of the ship, which is not reached by the module 15 because of safety reasons, but which anyway is very close to the lower end 25 of said module; line 28 represents the waterline of ship in the conditions of maximum load and it coincides with the sea level, also inside the module 15 when the pumps (not shown) are not in operation; line 29 points out on the contrary the sea level inside the module 15 when the pumps are in operation, in the steady state, if their delivery and delivery head are known, with a sufficiently accurate estimate of all pressure drops from the water inlet of the piping 16 (at the bottom of the net), to its outlet into the module 15, and to the filtering passage till reaching the pumps.

The hole 32 of the module 15 whose inside diameter is supposed to be equal to the diameter of the piping 16, which in this instance is of 800 mm, is provided with a flanged crown for realizing a connection to the piping 16 itself by means of bolts.

An inside coating made up of rubber is provided in correspondence to the connection zone in order to keep the same kind of contact with the walls that fish experience inside said piping 16 under quite narrow conditions.

Water sucked through the piping 16 due to the level difference caused by the operation of pumps, goes from a section of 800 mm diameter (about 0.5 m²) to the inside rectangular cross-section of the module 15 (sides 3.90 x 1.10 m, equal to about 4.30 m²), according to a certain graduality that is generated by the two walls 33 inside the module 15. Accordingly, the speed which is already quite relevant within the piping 16 is quite soon reduced to less than 1/8 its value, till reaching a compatible steady state that makes sufficiently soft the operation of taking the fish contained in the water to the deck of the ship, by means of the hoister 33. The large disproportion between the cross section of the piping 16 and that of the module 15 (which is of about 4/1) ends up in forcing any fish of large sizes to arrange transversely to the module 15, just like the hoister 33 requires, so that the best operation is obtained.

The hoister 33 is essentially a "bucket chain water wheel" and is made up of two pairs of wheels 35, 36 of large diameter, the lower pair 35 of which is idle, whereas the upper wheel 36 is a driving wheel, through an electric motor (not shown) or, better, through an oleodynamic motor (for better accuracy of speed regulation), which motor is outside said module 15 and can be disconnected from the same, when the module 15 is to slide towards its upper position 15a.

The buckets 37 have a lower cylindrical portion of the shape represented in Figure 4 with a diameter of about 800 mm, for receiving the fish of larger sizes passed possibly through the piping 16. If the length of each bucket 37 transversely to the module 15 is of about 3.5 m, a cross section and a length which are suitable to receive also tunnies of large sizes, about 200 kg each, will be at disposal.

In order to obtain a suitable kinematic motion on the passage of the wheels 35 and 36, the buckets 37 are not adjacent and consecutive to one another, but they are spaced by straight lengths 38 which are not useful for lifting the catch, but are very efficient to obtain the best filling of each bucket 37, whose volume is anyway very remarkable and can stand also large amounts of catch. Moreover, when required by fishiness, it is possible to speed up the recovery operation by varying the lifting speed.

Both the buckets 37 and the straight members 38 are made up of stainless steel, whose surface in contact with the fish and the reinforcing structures on the other side is perfectly smooth, and in addition they bear some holes of small size as a contribution to the filtering function. The separation of water from the solid contents (fishes or other foreign bodies happened to end up in the bag of the net) is obtained by means of the separating bulkhead 39 which is made up of strong stainless steel plate, whose width in the example represented in the figure is of 3.90 m, while the total length is of 4.10 m so that the total surface area is of about 16 m². Keeping into account the fact that the cross section of the piping 16 for arrival of water is of about 0.5 m², it can be observed that said bulkhead 39 realizes a good filter if its whole surface is drilled with small diameter holes (diameters not larger than 5 mm), said holes being drilled very close to one another as the strong thickness of the plate can allow it without weakening the structural functions of the plate itself. The shape and the extent of said "bulkhead-filter 39" are such as to draw water with progressive continuity from its inlet till water itself exhausts its function of carrying the catch contained in the same.

Water separated from its solid contents fills through the bulkhead 39 the compartment 40 which performs just the function of a "plenum" from which it is sucked continuously and expelled out of the module.

Suction is performed by two centrifugal electric pumps 34 located within a suitable tight-seal compartment, the sucking mouth of said pumps being connected to said compartment 40 while the delivery mouth is connected to the outside, on the back side of the module 15. Two pumps 34 instead of one pump are provided, so as to have a spare pump, and also because if one only pump or two pumps are put into action, two values of delivery are obtained which can be adapted to the fishiness of a particular moment. To get an idea of the order of magnitude of the phenomena involved, it can be hypothesized that the level of water inside the module 15, line 29, becomes stabilized at one metre below the sea level outside the module 15, so that the corresponding outlet speed of water from the piping 16 within the module 15 would be $V = (2 g h)^{1/2}$ wherein h is the hydrostatic head (neglecting pressure drops along the pipe), which is just equal to 1 metre, and then $V = 4.43$ m/s which corresponds to a delivery of about 8,000 m³/h, as the cross-sectional area is of about 0.5 m².

Each pump with a delivery of 4,000 m³/h under a head of at least 10 m, requires an electric motor of about 200 CV at 1,500 rounds per minute, so that the total power for pumping amounts to as much as 400 CV. Such power is employed not only for expelling water from the compart-ment 40, but also supplies a propelling thrust in the direction of the outlet jet.

In case of one only pump put in action, the speed of water within the pumping is of about 2.21 m/s, whereas the inside level becomes stabilized at about 0.25 m below the sea level.

Employing electric motors with double or triple polarity, it is possible to obtain a wide range of pump deliveries, according to fishiness.

**Claims**

1. A trawling boat (1) comprising a net (13) having bag (17) in its lower end and suitable for trawling, said boat (1) being equipped with a piping (16) for sucking the catch out of the net (13) into the boat, said piping (16) being made up of modular pieces which are coupled to one another, whose lower end, which is provided with a suction mouth, is at the point corresponding to the bag (17) of said net (13); suction means (34) for sucking the catch through said piping; separation means (15) which are coupled to the upper end of said piping (16) for the separation of the catch from water; hoisting means (38) for lifting the catch from the separation zone up to the inside of the boat (1); an opening or well (11), obtained in the hull (9) of the boat (1), through which the net (13) and the piping (16) are eased away and the catch is lifted on board; and whereby said separation means and said hoisting means are realized as a single module (15) which is provided with a mouth (32) for coupling the same with the upper end of the pipe (16), and with lifting means (38), characterized in that a gradual flaring of the cross-sectional area of the module (15) with respect to the cross-sectional area of the piping (16) itself occurs at the point corresponding to said coupling with the piping (16), and in that a separating bulkhead (39) bearing a number of small-size holes is provided near said coupling zone between said module (15) and the piping (16), in communication with a compartment (40) inside which the water sucked by the pipe (16) passes, means (34) being provided within said compartment (40) for expelling water towards the outside.

2. A boat according to claim 1, characterized in that a cavity (10) is realized in its keel, astride the longitudinal symmetry plane, from the astern zone to the inlet mouth of said opening or well (11), which cavity (10) is connected to the well itself and said opening or well (11) is realized in the hull (9) in an area which is not affected by the longitudinal pitching motion of the boat.

3. A boat according to claim 2, characterized in that said opening (11) and said cavity (10) are of the same width.

4. A boat according to claims 2 or 3, characterized in that said cavity (10) is arranged between two structures which are in the shape of a vertical fin and guide the sliding motion of the net.

5. A boat according to anyone of the preceding claims, characterized in that two lateral ducted propellers are provided.

6. A boat according to claim 1, characterized in that said module (15) is of substantially parallelepipedal shape.

7. A boat according to claim 1 or 6, characterized in that the suction of water out of said compartment (40) is obtained by at least one centrifugal electric pump (34), or preferably by means of two centrifugal electric pumps (34).

8. A boat according to claim 1, 6 or 7, characterized in that said lifting means (38) within said module are made up of a bucket hoisting device.

9. A boat according to claim 8, characterized in that said bucket hoisting device (38) rotates between a pair of idle wheels (35) and a pair of driving wheels (36).

10. A boat according to claim 8 or 9, characterized in that said hoisting device (38) comprises buckets (37) spaced alternately by straight lengths.

11. A boat according to claim 1 or 6-10, characterized in that said module (15), during operation, is arranged inside said opening or well (11).

12. A boat according to anyone of the preceding claims, characterized in that a net-winding wheel (18) is provided, as well as two winches (3) for dragging the net (13), which are arranged on the astern zone of the boat (1), for housing the ropes of the diverging members (5), and two winches (7), at the points corresponding to the forward zone of the boat (1), for towing the net itself.

13. A boat according to anyone of the preceding claims, characterized in that a front directional motor (21) is provided.

14. A boat according to anyone of the preceding claims, characterized in that an electric power supply up to the mouth of the net is provided for one or more projectors (22), and/or one or more TV cameras (23).

15. A boat according to anyone of the preceding claims, characterized in that a compressed air hose (14) is provided along the piping (16), which hose (14) feeds two return branches (24) of gradually decreasing cross-sectional area which also bear a number of small-size holes, towards the arms of the net, so as to realize two ideal air-bubble walls.

16. A boat according to anyone of the preceding claims, characterized in that a floating buoy (19) is provided at the point corresponding to the bag (17) of the net, with a rope (20) of adjustable or non-adjustable length.

**Patentansprüche**

1. Schleppnetzschiff (1), mit einem Netz (13), das an seinem unteren Ende einen Sack (17) hat und zum Schleppfischfang geeignet ist, mit einer Rohrleitung (16) zum Absaugen des Fanges aus dem Netz (13) zum Schiff, wobei diese Rohrleitung (16) aus modulartigen und miteinander kuppelbaren Teilen besteht und deren unteres Ende mit einer Saugmuendung an der dem Netz-Sack (17) entsprechenden Stelle versehen ist; mit Saugmitteln (34) zum Saugen des Fanges durch die vorgenannte Rohrleitung; mit Trennmitteln (15), die and das obere Ende der Rohrleitung (16) zum Trennen des Fanges vom Wasser angekuppelt sind; mit Hebenmitteln (38) zum Heben des Fanges von den Trennstelle bis ins Innere des Schiffes (1); mit einer Oeffnung oder einem Schacht (11) im Schiffsrumpf (9), durch welche das Netz (13) und die Rohrleitung (16) aufgehissen und der Fang an Bord aufgehoben werden und wobei die Trenn- und Hebemittel als ein einziges Modul ausgebildet sind, das mit einem Mundstueck zur Kupplung desselben an das obere Ende der Rohrleitung (16) und an die Hebemittel versehen ist, dadurch gekennzeichnet, dass die stufenweise Ausweitung der Querschnittsflaeche des Moduls (15) gegenueber der Querschnittsflaeche der Rohrleitung (16) an der, der vorgenannten Kupplung mit der Rohrleitung (16) entsprechenden Stelle stattfindet und dass ein getrenntes, eine Anzahl von kleinen Loechm aufweisendes Schott (39) in der Naehe der Kupplungszone zwischen dem genannten Modul (15) und der genannten Rohrkupplung (16) vorgesehen ist, das mit der Abteilung (40) in Verbindung steht, innerhalb welcher das durch die Rohrleitung (16) gesaugte Wasser fliesst, wobei in der genannten Abteilung (40) Mittel zum Auswerfen des Wassers vorgesehen sind.

2. Schiff nach dem Anspruch 1, dadurch gekennzeichnet, dass in seinem Kiel rittlings zur Symmetrielaengsebene, von der Heckzone zur genannten Oeffnung oder Schacht (11) eine Aushoehlung (10) vorgesehen ist, die mit dem Schacht verbunden ist, wobei die genannten Oeffnung oder Schacht (11) im Schiffsrumpf (9) und zwar in einer durch das Stampfen des Schiffes nicht beeintraechtigen Zone vorgesehen ist.

3. Schiff nach dem Anspruch 2, dadurch gekennzeichnet, dass die vorgenannte Oeffnung (11) und die vorgenannte Aushoehlung (10) die gleiche Breite aufweisen.

4. Schiff nach Anspruch 2 oder 3, dadurch gekennzeichnet, dass die genannte Aushoehlung (10) zwischen zwei Bauelementen angeordnet ist, die als senkrechte Flossen geformt sind und zur Fuehrung der Gleitbewegung des Netzes dienen.

5. Schiff nach irgendeinem der vorhergenden Ansprueche, dadurch gekennzeichnent, dass zwei seitliche verkleidete Schiffspropeller vorgesehen sind.

6. Schiff nach dem Anspruch 1, dadurch gekennzeichnet, dass das vorgenannte Modul (15) eine wesentlich parallelepipedartige Form hat.

7. Schiff nach dem Anspruechen 1 oder 6, dadurch gekennzeichnet, dass Wasser aus der vorgenannten Abteilung (40) durch mindestens eine elektrische Kreiselpumpe (34) oder vorzugsweise durch zwei elektrische Kreiselpumpen (34) ausgesaugt wird.

8. Schiff nach den Anspruechen 1, 6 oder 7, dadurch gekenzeichnet, dass die vorgenannten Hebemittel (38) des vorgenannten Moduls aus einer Eimerhebevorrichtung (38) besteht.

9. Schiff nach dem Anspruch 8, dadurch gekennzeichnet, dass die vorgenannte Eimerhebevorrichtung (38) zwischen einem Paar von Freilaufraedern (35) und einem Paer von Antriebsraedern herumlaeuft.

10. Schiff nach dem Anspruch 8, dadurch gekennzeichnet, dass die vorgenannte Hebevorrichtung (38) voneinander durch gerade Strecken getrennte Eimer (37) aufweist.

11. Schiff nach den Anspruechen 1 oder 6 bis 10, dadurch gekennzeichnet, dass das vorgenannte Modul (15) waehrend des Betriebes innerhalb der vorgenanten Oeffnung oder Scahchtes (11) angeordnet ist.

12. Schiff nach je einem der vorhergehenden Anspruechen, dadurch gekennzeichnet, dass ein Rad (18) zur Aufwicklung und zwei Winden (3) zum Schleppen des Netzes (3) vorgesehen sind, die in der Heckzone des Schiffes (1) zum Aufnehmen der Taue der Spreizelemente (5) angeordnet sind und dass zwei, and den der Bugzone des Schiffes entsprechenden Stelle angeordenete Winden (7) zum Aufschleppen des Netzen vorgesehen sind.

13. Schiff nach je einem der vorhergehenden Ansprueche, dadurch gekennzeichnet, dass ein vorderer verstellbarer Motor (21) vorgesehen ist.

14. Schiff nach je einem der vorhergehenden Ansprueche, dadurch gekennzeichnet, das eine Versorgung der elektrischen Leistung bis zum Mundstueck des Moduls fuer einen oder mehre Projektoren (22) und/oder fuer eine oder mehrere TV-Kamera (23) vorgesehen ist.

15. Schiff nach je einem der vorhergehenden Ansprueche, dadurch gekennzeichnet, dass laengs der Rohrleitung (16) ein Druckluftschlauch (14) angeordnet ist, welcher zwei Rueckfuehrabzweigungen (24) mit stufenweise abnehmendem Querschnitt versorgt und auch eine Anzahl von kleinen Loechern in Richtung zu den Netzarmen aufweist, um somit zwei ideale Wasserblasen- Waende zu schaffen.

16. Schiff nach je einem der vorhergehenden ANsprueche, dadurch gekennzeichnet, dass and der dem Netzsack (17) entsprecheder Stelle eine Schwimmboje angeordene ist, die mit einem, eine regelbare oder unregelbare Laenge aufweisenden Seil (20) versehen ist.

**Revendications**

1. Bateau (1) pour la pêche a chalut, comprenant un chalut (13) ayant un sac (17) à son bout inférieur et adadpté à la traîne, ledit bateau (1) étant equipé d'une tubulure (16) pour aspirer la pêche du chalut (13) à bord, ladite tubulure (16) étant realisée d'éléments modulaires, qui sont accouplés entre eux et dont le bout inférieure, qui est muni d'un embout d'aspiration, se trouve à l'endroit correspondant audit sac (17) dudit chalut (13), de moyens d'aspiration (34) pour aspirer la pêche à travers ladite tubulure (16), de moyens de séparation (15) qui sont accouplés au bout supérieure de ladite tubulure (16) pour la séparation de la pêche de l'eau; de moyens de levage (38) pour hisser la pêche de la zone de séparation jusqu'à l'intérieur du bateau (1); d'une ouverture ou puits (11), obtenue dans la coque (9) du bateau (1), à travers de laquelle le chalut (13) et la tubulure (16) sont élevés et la pêche est hissée à bord, de sort que lesdits moyens de séparation ed te levage sont réalisés comme un single module (15), qui est muni d'un embout (32) pour l'accoupler avec le bout supérieure de la tubulure (16) et avec les moyens de levage (38), caractérisé en ce que un évasement gradual de l'air de section transversale par rapport à l'air de section transversale de la tubulure (16) a lieu à l'endroit correspondant audit accouplement avec la tubulure (16), et en ce que un cloison de séparation, ayant un nombre de petits trous, est prévu à proximité de ladite zone d'accouplement entre ledite module (15) et la tubulure (16), en communication avec un compartiment (40), à l'intérieur duquel passe l'eau aspirée par la tubulure (16), de moyens (34) étant prevus dans ledit compartiment (40) pour chasser en dehors du bateau.

2. Bateau selon la revendication 1, caractérisé en ce que une cavité (10) est réalisé dans la quille à cheval du plan de symmetrie longitudinal, de la zone arrière à la bouche de ladite ouverture ou puits (11), ladite cavité étant jointe au puits (11), qui est réalisé dans la coque (9) à un endroit, qui n'est pas influencé par le mouvement de tangage longitudinal.

3. Bateau selon la revendication 2, caractérisé en ce que ladite ouverture (11) et ladite cavité (10) ont la même largeur.

4. Bateau selon les revendications 2 ou 3, caractérisé en ce que ladite cavité (10) est placée entre deux structures, qui ont la forme d'un aileron vertical et guident le movement de coulissement du chalut.

5. Bateau selon une quelconque des revendications précédentes, caractérisé en ce qu'il a deux hélices carénées.

6. Bateau selon la revendication 1, caractérisé en ce que ledit module (15) a une forme sensiblement parallélépipêdique.

7. Bateau selon les revendications 1 ou 6, caractérisé en ce que l'aspiration d'eau dudit compartiment (40) est obtenue par ou moins une électropompe centrifuge (34) ou préférablement, par deux électropompes centrifuges (34).

8. Bateau selon les revendications 1,6 ou 7, caractérisé en ce que lesdits moyens de levage dans ledit module sont formés par un dispositif d'élévation à puisoirs.

9. Bateau selon les revendication 8 ou 9, caractérisé en ce que ledit dispositif d'élévation (38) tourne entre un couple de roues folles (35) et un couple de roues motrices (36).

10. Bateau selon la revendication 8, caractérisé en ce que ledit dispositif d'élévation à puisoirs (38) comprend des puisoirs (37) séparés entre eux par secteur rectlignes.

11. Bateau selon les revendications 1 ou 6-10, caractérisé en ce que ledit module (15) est placé, pendant operation, à l'imtérieur de ladite ouverture ou puits (11).

12. Bateau selon une quelconques des revendications précédentes, caractérisè en ce qu'il a une roue (18) d'enroulement du chalut, ainsi que deux treuils (3) pour trainer le chalut (13), qui sont disposés sur la zone arrière du bateau (1) pour recevoir les cordes des éléments divergents (5) et deux treuils (7) à l'endroits correspondants à l'avant du bateau (1) pour hisser le chalut.

13. Bateau selon une quelconque des revendications précédentes, caractérisé en ce qu'il a un moteur directionnel antérieur (21).

14. Bateau selon une quelconque des revendications précédentes, caractérisè en ce qu'une alimentation d'énergie électrique est prevue pour un ou plusieurs projecteurs (22) et/ou une ou plusieures caméra de télévision (23).

15. Bateau selon une quelconque des revendications précédentes, caractérisè en ce qu'un boyou (14) à air comprimé est prevue le long de la tubulure (16), boyou qui alimente deux branches (24) de retour, ayants aire de section transversale dècroissante, et qui portent un nombre de petits trous vers les bras du chalut, pour former deux parois idéals de bulles d'air.

16. Bateau selon une quelconque des revendications précédentes, caractérisè en ce qu'un bouée flottable (19) est placée à l'endroit correspondant au sac (17) du chalut, avec une corde (20) de longueur réglable ou non réglable.

FIG. 1

FIG. 2

FIG. 3

FIG. 4

15

16

16

32

34   25   39

15

36   26   15

31

37

33

28   30

38

29

35

40

27

EP 0 467 003 B1

13